# EUROPEAN PATENT SPECIFICATION

(11) **EP 3 789 242 B1**
(45) Date of publication and mention of the grant of the patent: **30.03.2022**
(21) Application number: 20000325.9
(22) Date of filing: 04.09.2020
(51) Int. Cl.: B60P 1/44, B60P 3/08

(54) **SYSTEM FOR LIFTING PLATFORMS AND VEHICLE FOR TRANSPORTING MOTOR VEHICLES EQUIPPED WITH SUCH SYSTEM FOR LIFTING PLATFORMS**
SYSTEM ZUM HEBEN VON PLATTFORMEN UND FAHRZEUG ZUM TRANSPORTIEREN VON MIT SOLCH EINEM SYSTEM ZUM HEBEN VON PLATTFORMEN AUSGESTATTETEN KRAFTFAHRZEUGEN
SYSTÈME PERMETTANT DE SOULEVER DES PLATEFORMES ET VÉHICULE DE TRANSPORT DE VÉHICULES À MOTEUR ÉQUIPÉS D'UN TEL SYSTÈME POUR SOULEVER DES PLATEFORMES

(30) Priority: 09.09.2019 IT 201900015935
(43) Date of publication of application: 10.03.2021
(73) Proprietor: Rolfo S.p.A., 12042 Bra (CN) (IT)
(72) Inventor: Arnulfo, Elio, I-12042 BRA (CN) (IT); Rolfo, Giorgio, I-12042 BRA (CN) (IT)
(74) Representative: Garavelli, Paolo

(56) References cited:
- EP-A1- 0 418 178
- US-A- 4 804 066
- US-A- 5 067 862

## Description

The present invention refers to a system for lifting platforms and to a vehicle for transporting motor vehicles equipped with such system for lifting platforms. Such systems are known e.g. from US 5 067 862 A and from US 4 804 066 A.

In particular, the present invention refers to a truck for transporting motor vehicles or car transporter and to a related system for lifting platforms, in order to lift and lower the platform which forms the rear part of the lane of a shelter for loading motor vehicles over the cabin of the tractor.

More in particular, the invention can be coupled with a retractable lane such as the one disclosed in Italian Patent No. 1394339 and in its corresponding European Patent No. EP2427347, in order to free space between the bottom of the loaded car and the cabin of the tractor, and allow lowering the loaded car keeping a safety distance from the cabin.

The lifting system of the invention can be suited to every cabin, with or without rear chamfer, and can be also coupled with non-sliding shelters.

Systems are known for lifting platforms for vehicles for transporting motor vehicles, which allow loading a car on the shelter placed over the cabin of the tractor.

In these known systems, the car must be loaded on the cabin with the platforms in their ramp position, fastened to the lanes, and afterwards placed by lowering the rear part of the lane to decrease the overall size in height of the car, in order to fall within the height limits imposed by the laws of the Country where the car transport occurs.

In the prior art, the lowering of the rear part of the lane occurs through manual and/or hydraulic mechanisms, linked or not to the movement of the upper platform.

These known systems for lifting platforms show several problems of efficiency, of ergonomy and of cost, caused by the complex lifting mechanisms used.

Object of the present invention is solving the above problems of prior art systems for lifting platforms for vehicles for transporting motor vehicles, by providing a vehicle for transporting motor vehicles equipped with a system for lifting platforms, and its related system for lifting platforms, which allow performing two translating and slanting movements of the platforms, with a mechanism which is simple to make, ergonomic and cheap.

The above and other objects and advantages of the invention, as will appear from the following description, are obtained with a system for lifting platforms and a vehicle for transporting motor vehicles equipped with such system for lifting platforms as claimed in the independent claims. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, witout departing from the scope of the invention as contained in the enclosed claims.

The present invention will be better described by some preferred embodiments thereof, provided as a non-limiting example, with reference to the enclosed drawings, in which:

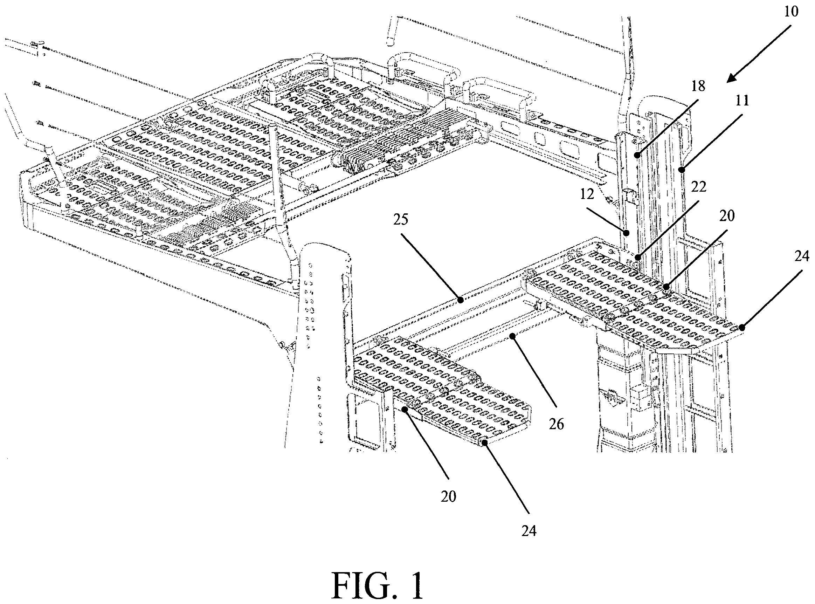

- Figure 1 is a top perspective view of a system for lifting platforms according to the present invention;

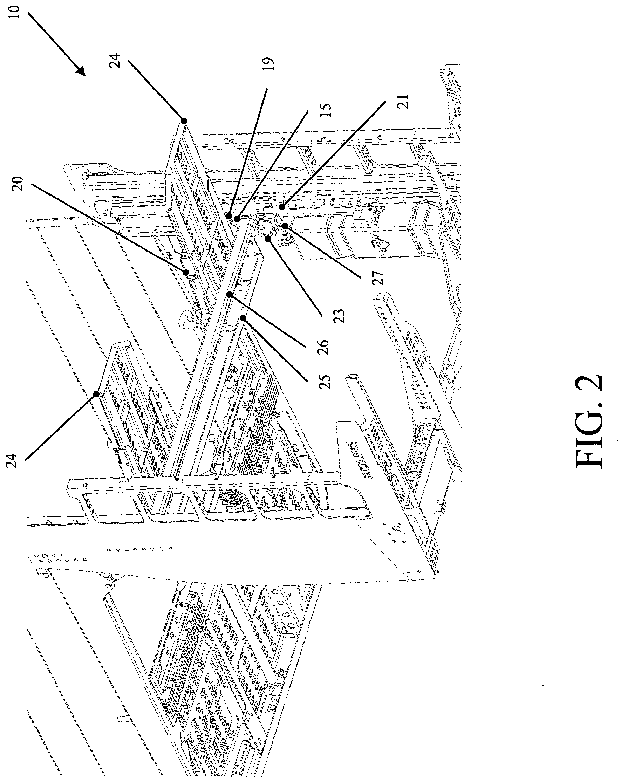

- Figure 2 is a bottom perspective view of a system for lifting platforms according to the present invention;

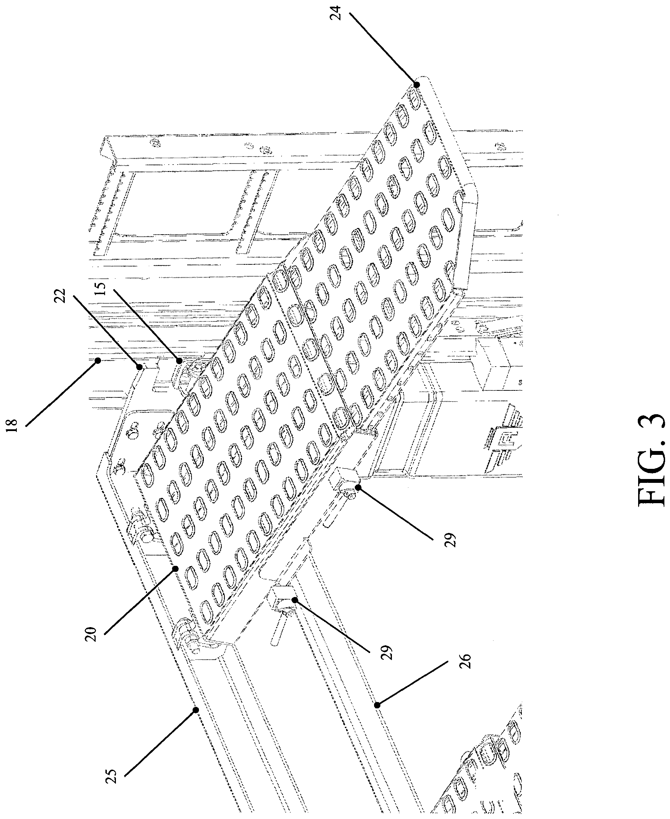

- Figure 3 is a perspective view of a part of a system for lifting platforms according to the present invention; and
- Figure 4 is a side view of a vehicle for transporting motor vehicles according to the present invention.

With reference to the Figures, a preferred embodiment of the system for lifting platforms and of the vehicle for transporting motor vehicles equipped with such lifting system of the present invention is shown and described.

The system 10 for lifting platforms 20 of the vehicle for transporting motor vehicles of the invention comprises supporting means 12 of a front cross member 25, connected to said front cross member 25 and assembled sliding on a column 11, preferably on first guiding means 18 connected to the column 11; said supporting means 12 being configured to vertically translate, in a preferred way scoliding inside the column 11 and/or the first guiding means 18.

In a preferred way, the first guiding means comprise two guides 18, each fastened to the internal side of one of the two columns 11 placed next to the cabin 2 of the vehicle for transporting motor vehicles, and the front cross member 25 is fastened to two supports 12, each one sliding on one of the two guides 18.

The system 10 of the invention further comprises bearing means 15 of a rear cross member 26, connected to said rear cross member 26 and assembled sliding on the supporting means 12, preferably on second guiding means 19 connected to the supporting means 12; said bearing means 15 being configured to vertically translate, in a preferred way in parallel to the first guiding means 18, sliding on the second guiding means 19 which are for example composed of a prismatic guide 19 made on a support 12.

In a preferred way, the second guiding means comprise two prismatic guides 19, each fastened to a support 12, and the bearing means are composed of two brackets 15, each sliding inside one of the two prismatic guides 19, to which the rear cross member 26 is fastened.

The bearing means, in a preferred way the bracket 15, are actuated by first actuating means 21, for example comprising an hydraulic cylinder 21 vertically assembled and having an end connected to the bearing means 15, and the other end connected to the column 11.

Preferably, the movement of the bearing means 15 is limited by two abutments, an upper abutment 22 and a lower abutment 23, fastened to the support 12; a third abutment 27 fastened onto the first guiding means 18 downward limits the stroke of the supporting means 12.

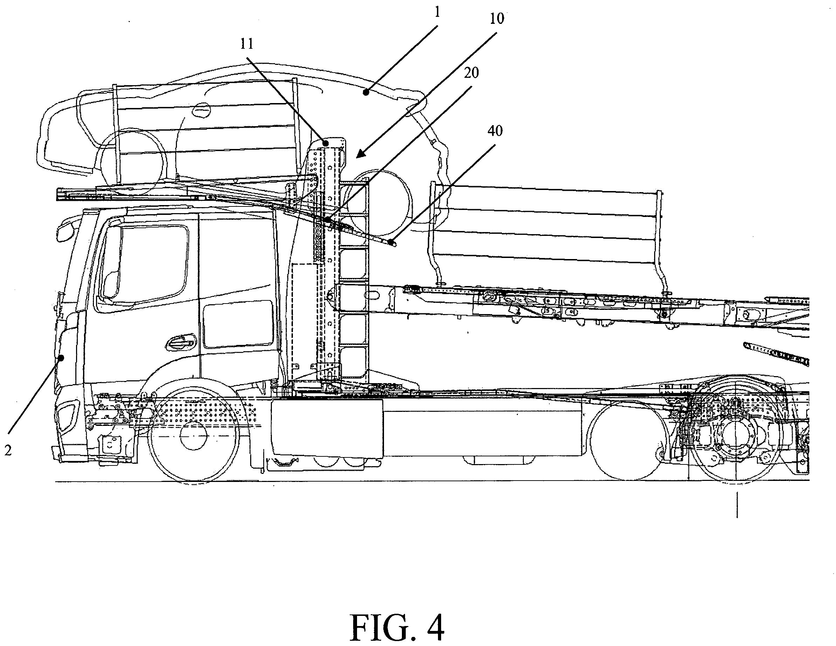

The system 10 further comprises at least one platform 20 hinged to the front cross member 25, with an optional extension 24, and preferably comprises two platforms 20 which are the rear lane which supports the axle of the car 1 loaded onto the cabin 2 of the vehicle for transporting motor vehicles of the invention, which must be lowered to decrease the overall sizes in height of the car 1, as shown in Figure 4; said at least one platform 20 is abutted onto the rear cross member 26 which supports it, and determines its slanting, following the movement of the bearing means 15 actuated by the first actuating means 21.

The operation of the system 10 for lifting platforms according to the present invention will now be described.

In a first position of the system 10 of the invention, the cylinder 21 is connected to the bracket 15, and completely extended in its position of maximum possible height.

In this position, the bracket 15 is abutted onto the upper abutment 22, and supports it, together with the support 12 to which it is fastened, in a top position; in this way, the brackets 15 supports the rear cross member 26 fastened thereto and the front cross member 25 fastened to the support 12, and, through the cross members 25 and 26, the whole platform 20 in its top position. By actuating the cylinder in order to retract it, the bracket 15 and the rear cross member 26 connected thereto are lowered, and with them, through the upper abutment 22 bearing onto the bracket 15, the support 12 and the front cross member 25 fastened thereto, are also lowered. During this movement, the platforms 20 keep their initial slanting and translate downwards, remaining mutually parallel.

When the support 12 bears onto the third abutment 27 and the cylinder 21 continues to be actuated by retracting it, the bracket 15 is detached from the upper abutment 22 and, by sliding on the prismatic guide 19, is lowered together with the rear cross member 26 connected thereto. Consequently, the platforms 20 are slanted downwards on their rear part, till the bracket 15 reaches the lower abutment 23 fastened to the support.

Suitable blocking elements 29 of a known type prevent the accidental lifting of the platforms 20 from the rear cross member 26.

Advantageously, the system for lifting platforms according to the present invention allows performing the two translating and slanting movements of the platforms with a single pair of cylinders, reducing the costs and improving the efficiency and the ergonomy of the system.

In fact, the two moving phasesd of the system, translation and slanting, are indispensable, because the translation only would not allow lowering the loaded car as much as necessary, and would cause an interference between the platforms and the bottom of the car itself. Also, only the rotation would not allow lowering the loaded car enough, and would cause an interference between the front cross member and the bottom of the car.

## Claims

1. System (10) for lifting platforms (20) of a vehicle for transporting motor vehicles comprising:
supporting means (12) of a front cross member (25) connected to said front cross member (25) and assembled sliding on a column (11);
bearing means (15) of a rear cross member (26) connected to said rear cross member (26), actuated by first actuating means (21) and assembled sliding on the supporting means (12);
at least one platform (20) hinged to the front cross member (25) and abutted onto the rear cross member (26) which supports it and determines its slanting, following a movement of the bearing means (15) actuated by the first actuating means (21).

2. System (10) for lifting platforms (20) of a vehicle for transporting motor vehicles according to claim 1, **characterized in that** said supporting means (12) and said bearing means (15) are configured to vertically translate.

3. System (10) for lifting platforms (20) of a vehicle for transporting motor vehicles according to any one of the previous claims, **characterized in that** the first actuating means (21) comprise an hydraulic cylinder (21) having an end connected to the bearing means (15) and another end connected to the column (11).

4. System (10) for lifting platforms (20) of a vehicle for transporting motor vehicles according to any one of the previous claims, **characterized in that** the supporting means (12) are assembled sliding on first guiding means (18) connected to the column (11) and the bearing means (15) are assembled sliding on second guiding means (19) connected to the supporting means (12).

5. System (10) for lifting platforms (20) of a vehicle for transporting motor vehicles according to claim 4, **characterized in that** the supporting means comprise a support (12) sliding inside the column (11) and/or the first guiding means (18) and the second guiding means (19) comprise a prismatic guide (19) made on the support (12).

6. System (10) for lifting platforms (20) of a vehicle for transporting motor vehicles according to claim 4 or 5, **characterized in that** it comprises two abutments, an upper abutment (22) and a lower abutment (23), fastened to the supporting means (12) and configured to limit the movement of the bearing means (15), and **characterized in that** it further comprises a third abutment (27) fastened onto the first guiding means (18) and configured to downward limit the stroke of the supporting means (12) .

7. System (10) for lifting platforms (20) of a vehicle for transporting motor vehicles according to any one of claims 4-6, **characterized in that** the bearing means (15) are configured to translate in parallel to the first guiding means (18) .

8. System (10) for lifting platforms (20) of a vehicle for transporting motor vehicles according to any one of claims 4 to 7, **characterized in that** the first guiding means comprise two guides (18), each fastened to an internal side of one of the two columns (11) placed next to the cabin of the vehicle for transporting motor vehicles, and the supporting means comprise two supports (12) fastened to the front cross member (25), each of said supports (12) sliding on one of the two guides (18), and **characterized in that** the second guiding means comprise two prismatic guides (19), each fastened to a support (12), and the bearing means are composed of two brackets (15), each sliding inside one of the two prismatic guides (19).

9. System (10) for lifting platforms (20) of a vehicle for transporting motor vehicles according to any one of the previous claims, **characterized in that** it comprises two platforms (20) which are the rear lane which supports an axle of the vehicle loaded onto the cabin.

10. Vehicle for transporting motor vehicles comprising a system (10) for lifting platforms (20) according to any one of the previous claims assembled next to the two columns (11) placed next to the cabin of the vehicle.

## Patentansprüche

1. System (10) zum Anheben der Plattformen (20) eines Fahrzeugs zum Transport von Kraftfahrzeugen, umfassend:
Stützmittel (12) für einen vorderen Querträger (25), der mit dem vorderen Querträger (25) verbunden und gleitend auf einer Säule (11) montiert ist;
Stützmittel (15) für einen hinteren Querträger (26), der mit dem hinteren Querträger (26) verbunden ist, durch erste Betätigungsmittel (21) betätigt wird und gleitend auf dem Stützmittel (12) angebracht ist;
mindestens ein Trittbrett (20), das an dem vorderen Querträger (25) angelenkt ist und auf dem hinteren Querträger (26) ruht, der ihn trägt und seine Neigung bestimmt, und zwar nach der Verschiebung des durch das erste Betätigungsmittel (21) betätigten Stützmittels (15).

2. System (10) zum Anheben der Plattformen (20) eines Fahrzeugs für den Transport von Kraftfahrzeugen nach Anspruch 1, **dadurch gekennzeichnet, dass** die Stützmittel (12) und die Stützmittel (15) so konfiguriert sind, dass sie sich vertikal verschieben.

3. System (10) zum Anheben der Plattformen (20) eines Fahrzeugs zum Transport von Kraftfahrzeugen nach einem der vorhergehenden Ansprüche, **dadurch gekennzeichnet, dass** die ersten Betätigungsmittel (21) einen Hydraulikzylinder (21) mit umfassen ein Ende mit der Stützeinrichtung (15) und das andere Ende mit der Säule (11) verbunden.

4. System (10) zum Anheben der Plattformen (20) eines Fahrzeugs für den Transport von Kraftfahrzeugen nach einem der vorangehenden Ansprüche, **dadurch gekennzeichnet, dass** die Stützmittel (12) verschiebbar an ersten Führungsmitteln (18) befestigt sind, die damit verbunden sind die Säule (11) und die Stützmittel (15) gleitend auf zweiten Führungsmitteln (19) montiert sind, die mit den Stützmitteln (12) verbunden sind.

5. System (10) zum Anheben der Plattformen (20) eines Fahrzeugs für den Transport von Kraftfahrzeugen nach Anspruch 4, **dadurch gekennzeichnet, dass** die Stützmittel eine Stütze (12) umfassen, die innerhalb der Säule (11) und/oder der ersten gleitet Führungsmittel (18) und die zweiten Führungsmittel (19) eine prismatische Führung (19) umfassen, die auf dem Träger (12) gebildet ist.

6. System (10) zum Anheben der Plattformen (20) eines Fahrzeugs zum Transport von Kraftfahrzeugen nach Anspruch 4 oder 5, **dadurch gekennzeichnet, dass** es zwei Anschläge aufweist, einen oberen Anschlag (22) und einen unteren Anschlag (23), befestigt an dem Stützmittel (12) und konfiguriert, um die Bewegung des Stützmittels (15) zu begrenzen, und **dadurch gekennzeichnet, dass** es auch einen dritten Anschlag (27) umfasst, der an dem ersten Führungsmittel (18) befestigt und konfiguriert ist, um nach unten zu begrenzen der Hub des Stützmittels (12).

7. System (10) zum Anheben der Plattformen (20) eines Fahrzeugs für den Transport von Kraftfahrzeugen nach einem der Ansprüche 4 bis 6, **dadurch gekennzeichnet, dass** die Stützmittel (15) so konfiguriert sind, dass sie sich parallel zu den ersten Führungsmitteln verschieben (18).

8. System (10) zum Anheben der Plattformen (20) eines Fahrzeugs zum Transport von Kraftfahrzeugen nach einem der Ansprüche 4 bis 7, **dadurch gekennzeichnet, dass** die ersten Führungsmittel zwei Führungen (18) umfassen, die jeweils an der Seite innen befestigt sind einer der beiden Säulen (11), die in der Nähe des Fahrerhauses des Fahrzeugs zum Transport von Kraftfahrzeugen angeordnet sind, und die Stützmittel zwei Stützen (12) umfassen, die an dem vorderen Querträger (25) befestigt sind, wobei jede der Stützen (12) Gleiten auf einer der beiden Führungen (18), und **dadurch gekennzeichnet, dass** die zweiten Führungsmittel zwei prismatische Führungen (19) umfassen, die jeweils an einem Träger (12) befestigt sind, und die Trägermittel aus zwei Klammern (15) bestehen, die jeweils gleitend sind in einer der beiden Prismenführungen (19).

9. System (10) zum Anheben der Plattformen (20) eines Fahrzeugs für den Transport von Kraftfahrzeugen nach einem der vorhergehenden Ansprüche, **dadurch gekennzeichnet, dass** es zwei Plattformen (20) umfasst, die die hintere Fahrspur bilden, die die Achse des Fahrzeugs trägt Fahrzeug auf die Kabine geladen.

10. Fahrzeug zum Transport von Kraftfahrzeugen, umfassend ein System (10) zum Anheben der Plattformen (20) nach einem der vorhergehenden Ansprüche, die in Übereinstimmung mit den zwei Säulen (11) montiert sind, die sich in der Nähe der Fahrzeugkabine befinden.

## Revendications

1. Système (10) de levage des plates-formes (20) d'un véhicule de transport de véhicules automobiles comprenant:
des moyens de support (12) pour une traverse avant (25) reliés à ladite traverse avant (25) et montés coulissants sur une colonne (11);
des moyens de support (15) d'une traverse arrière (26) reliés à ladite traverse arrière (26), actionnés par des premiers moyens d'actionnement (21) et montés coulissants sur les moyens de support (12);
au moins un marchepied (20) articulé sur la traverse avant (25) et reposant sur la traverse arrière (26) qui le supporte et détermine son inclinaison, suite au déplacement des moyens de support (15) actionnés par les premiers moyens d'actionnement (21).

2. Système (10) de levage des plates-formes (20) d'un véhicule pour le transport de véhicules automobiles selon la revendication 1, **caractérisé en ce que** lesdits moyens de support (12) et lesdits moyens de support (15) sont configurés pour translater verticalement.

3. Système (10) de levage des plates-formes (20) d'un véhicule pour le transport de véhicules automobiles selon l'une quelconque des revendications précédentes, **caractérisé en ce que** les premiers moyens d'actionnement (21) comprennent un vérin hydraulique (21) comportant un une extrémité reliée aux moyens de support (15) et l'autre extrémité reliée à la colonne (11).

4. Système (10) de levage des plates-formes (20) d'un véhicule de transport de véhicules automobiles selon l'une quelconque des revendications précédentes, **caractérisé en ce que** les moyens de support (12) sont montés coulissants sur des premiers moyens de guidage (18) reliés à la colonne (11) et les moyens de support (15) sont montés coulissants sur des seconds moyens de guidage (19) reliés aux moyens de support (12).

5. Système (10) de levage des plates-formes (20) d'un véhicule pour le transport de véhicules automobiles selon la revendication 4, **caractérisé en ce que** les moyens de support comprennent un support (12) coulissant à l'intérieur de la colonne (11) et/ou du premier les moyens de guidage (18) et les deuxièmes moyens de guidage (19) comprennent un guide prismatique (19) réalisé sur le support (12).

6. Système (10) de levage des plates-formes (20) d'un véhicule pour le transport de véhicules automobiles selon la revendication 4 ou 5, **caractérisé en ce qu'**il comporte deux butées, une butée supérieure (22) et une butée inférieure (23) , fixée aux moyens de support (12) et configurée pour limiter le déplacement des moyens de support (15), et **caractérisée en ce qu'**elle comprend également une troisième butée (27) fixée sur les premiers moyens de guidage (18) et configurée pour limiter vers le bas la course des moyens de support (12).

7. Système (10) de levage des plates-formes (20) d'un véhicule de transport de véhicules automobiles selon l'une quelconque des revendications 4 à 6, **caractérisé en ce que** les moyens de support (15) sont configurés pour translater parallèlement aux premiers moyens de guidage (18).

8. Système (10) de levage des plates-formes (20) d'un véhicule de transport de véhicules automobiles selon l'une quelconque des revendications 4 à 7, **caractérisé en ce que** les premiers moyens de guidage comprennent deux guides (18), chacun fixé du côté intérieur de l'une des deux colonnes (11) située à proximité de la cabine du véhicule de transport de véhicules automobiles, et les moyens de support comprennent deux supports (12) fixés à la traverse avant (25), chacun desdits supports (12) coulissant sur l'un des deux guides (18), et **caractérisé en ce que** les deuxièmes moyens de guidage comprennent deux guides prismatiques (19), chacun fixé à un support (12), et les moyens de support consistent en deux équerres (15), chacune coulissant à l'intérieur de l'un des deux guides prismatiques (19).

9. Système (10) de levage des plates-formes (20) d'un véhicule de transport de véhicules automobiles selon l'une quelconque des revendications précédentes, **caractérisé en ce qu'**il comprend deux plates-formes (20) qui constituent la voie arrière qui supporte l'axe du véhicule chargé sur la cabine.

10. Véhicule de transport de véhicules automobiles comprenant un système (10) de levage des plates-formes (20) selon l'une quelconque des revendications précédentes montées en correspondance avec les deux colonnes (11) situées à proximité de la cabine du véhicule.
